# EUROPEAN PATENT APPLICATION

(11) **EP 3 108 747 A1**
(43) Date of publication of application: **28.12.2016**
(21) Application number: 16175667.1
(22) Date of filing: 22.06.2016
(51) Int. Cl.: A01K 63/04, A01G 25/16

(54) **LIQUID PUMPING DEVICE WITH SOLAR PANEL**

(30) Priority: 23.06.2015 IT UB20151631
(71) Applicant: CLABER S.P.A., 33080 Fiume Veneto (PN) (IT)
(72) Inventor: SPADOTTO, Dario, 33170 Pordenone (IT); FRANCHINI, Gaetano, 33080 Fiume Veneto (PN) (IT)
(74) Representative: Mittler, Enrico

(57) **Abstract**

There is described a pumping device (1) for pumping liquids, in particular water, which comprises a pump (30) connectable to a pumping tube (15) which can be immersed in a liquid tank (17) to remove liquid therefrom, and a delivery tube (16) connectable to one or more irrigation devices (18), at least one rechargeable battery (10) for supplying power to the pump (30) and at least one solar panel (3) for charging said rechargeable battery (10). A manual controller (8) is interposed between the rechargeable battery (10) and the pump (30) for manually adjusting the liquid volume to be delivered and the liquid dispensing frequency. The manual controller comprises two rotary knobs (6) and (7) for adjusting the liquid volume delivered by the pump (30) and the actuation frequency of the pump (30), respectively. (Fig. 1)

## Description

The present invention relates to a liquid pumping device with solar panel.

Pumping devices for liquids (in particular irrigation water) are known, which include a pump electrically powered by means of a solar panel.

The power supply of the pump is entrusted to electric batteries which are charged in an adjustable manner by the electric energy generated by the solar panel, which in turn can vary with the weather conditions. The liquid volume delivered by the pump depends on the charge of the batteries.

Therefore, when the sky is cloudy or it is raining and the outside temperature is relatively low, the charge of the batteries drops and the pump reduces or cancels the liquid delivery, while the charge of the batteries increases and the liquid volume delivered by the pump increases when it is sunny and hot.

US 2010/303654 A1 describes a pumping device for liquids, in particular water, which substantially comprises the features defined in the preamble of claim 1.

It is the object of the present invention to provide an improved pumping device of the aforesaid type in which the power supply of the pump, and therefore the delivery of liquid by the pump itself, does not automatically depend on the weather conditions but instead can be adjusted manually by the user.

According to the invention, such an object is achieved by a liquid pumping device which also comprises the feature defined in the characterizing part of claim 1.

As a result, the operation of the pumping device according to the invention does not depend on the weather conditions, but on the manual controller interposed between the rechargeable batteries and the pump. It is therefore the user who imposes the amount of liquid to be delivered and the dispensing frequency, naturally taking into consideration, albeit not automatically, the weather conditions at the time.

Moreover, the introduction of a Schottky diode between the surge diverter and the rechargeable battery prevents the battery itself from discharging onto the solar panel when it is dark.

The features of the present invention will become more apparent from the following detailed description of a possible practical embodiment thereof, shown by way of example in the accompanying drawings, in which:
figure 1 shows a perspective view of a constructional example of the pumping device according to the invention;
figure 2 shows the same device seen from the bottom with respect to figure 1;
figure 3 shows an assembly of graphic symbols depicting the manual volume and frequency controller encompassed in the pumping device in figures 1 and 2;
figure 4 shows a diagrammatic functional view of the pumping device in figures 1 to 3;
figure 5 shows a diagrammatic overall view of an irrigation system which uses a pumping device according to the invention.

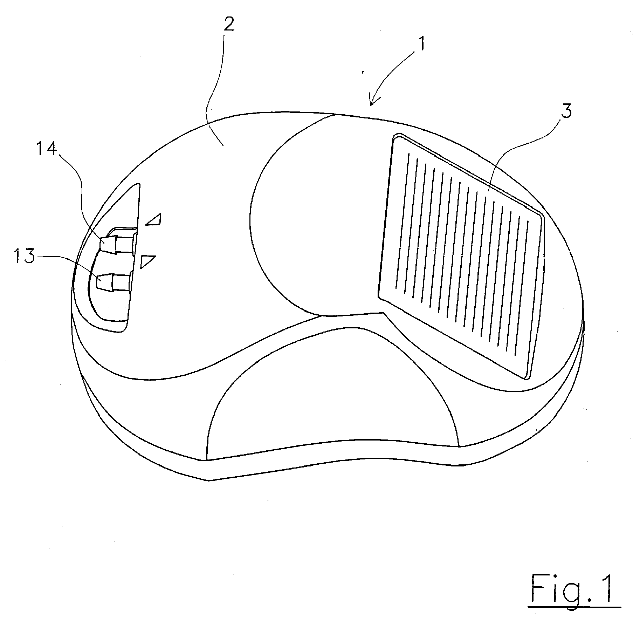

The pumping device shown by way of example in figures 1-3, where it is indicated as a whole with numeral 1, comprises a box-shaped body 2 on which a solar panel 3 is mounted, possibly made in several sections placed side-by-side.

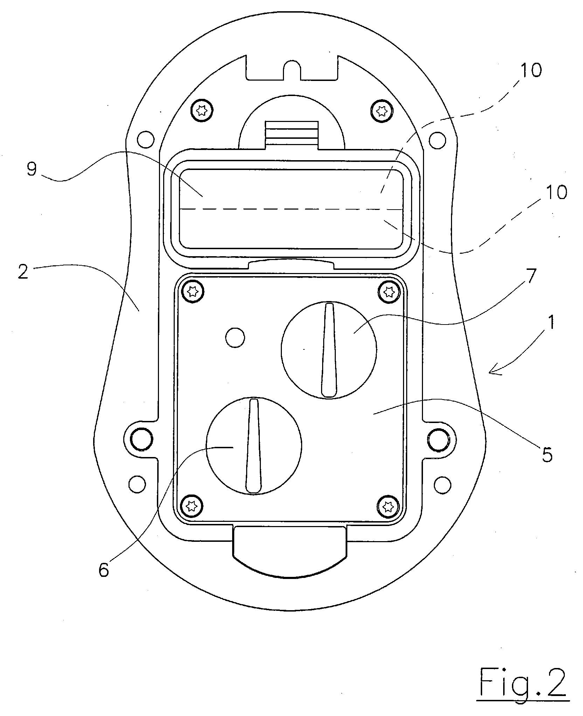

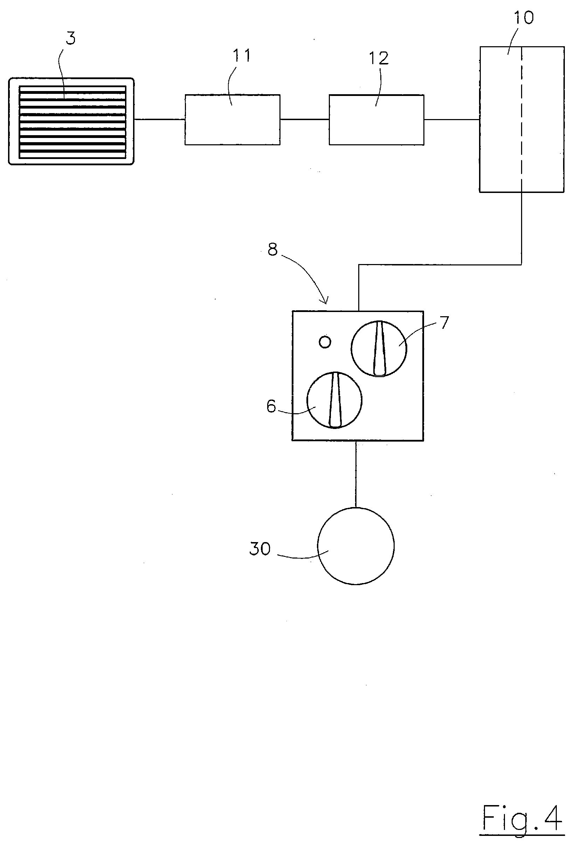

A pump 30 (not shown in figures 1-3 and 5, but depicted diagrammatically in figure 4) is inserted into the box-shaped body 2, the pump being closed by a cover 5 (figure 2) from which two rotary knobs 6 and 7 project, which are intended for manually adjusting the liquid volume delivered and the liquid dispensing frequency. A graphic depiction of the functions of the two knobs, which can overlap cover 5 and is useful for the user to understand the functions of the two knobs 6 and 7, is depicted in figure 4, where the manual controller is indicated as a whole with numeral 8.

A small cover 9, in turn preferably completed with graphic depictions (not shown) of the amount of liquid delivered each time the pump is actuated and as a function of the number of irrigators, closes a compartment (not shown) in which AA rechargeable batteries 10 are accommodated (diagrammatically depicted in figure 4). The two rechargeable batteries 10 receive a charging voltage from the solar panel 3 through a surge diverter 11 (e.g. a 3V surge diverter) and a Schottky diode 12, which serves to prevent the rechargeable batteries 10 from discharging onto the solar panel 3 when it is dark.

The pumping device 1 has, in a position opposite to that of the solar panel 3 (figure 1), two connections 13 and 14 for a pumping tube which is can be immersed in a liquid tank and for a liquid delivery tube which supplies one or more irrigation devices, respectively.

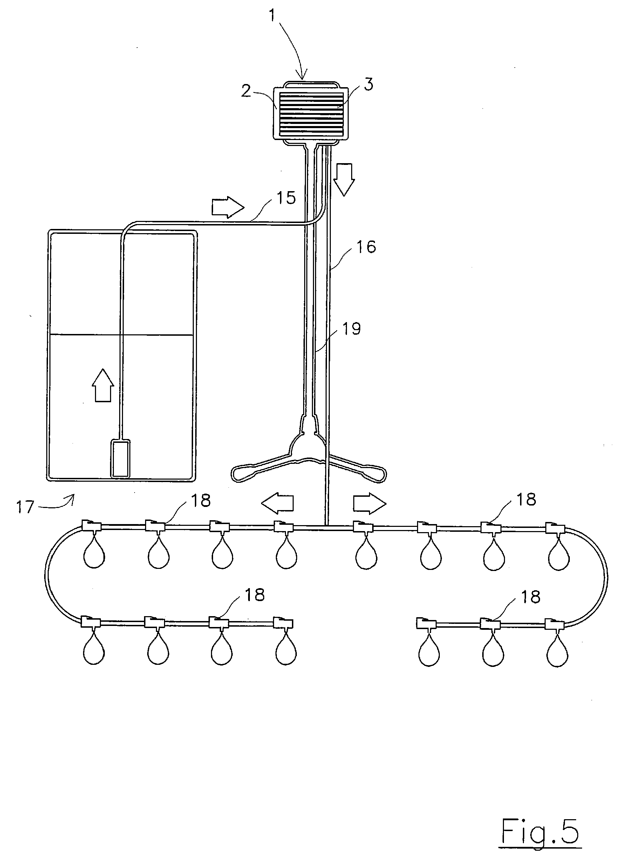

The complete diagram of the pumping device 1 is shown in figure 5, where numerals 15, 16, 17 and 18 indicate the pumping tube, the delivery tube, the liquid tank where the pumping tube 15 draws, and various irrigation devices, e.g. drip irrigation devices, respectively.

The same figure 5 shows the pumping device 1 at the top of an upright 19, but it may also rest on a surface or be hung on a wall, naturally with the solar panel 3 being always in a convenient position for receiving the sun rays.

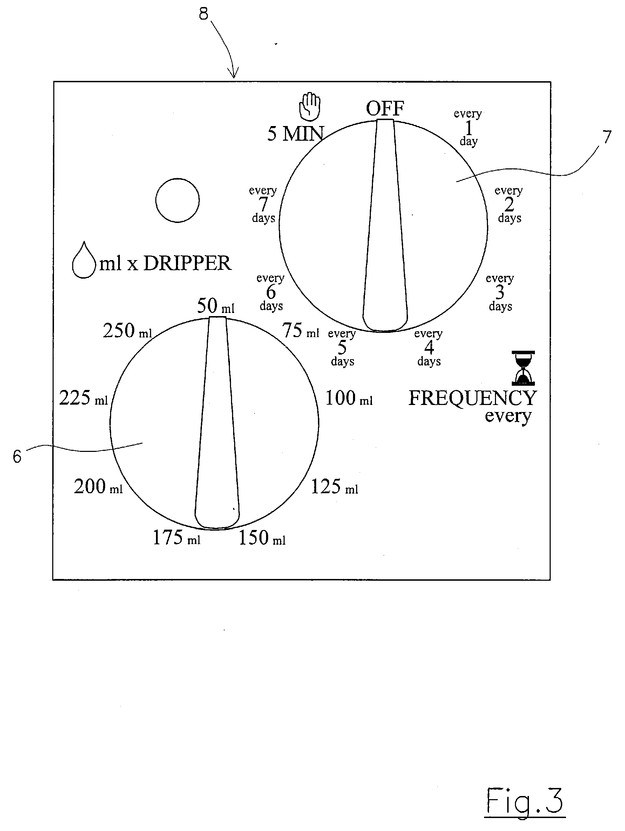

During operation, the solar panel 3 generates electric energy which keeps the rechargeable batteries 10 charged. They in turn control pump 30 to deliver liquid (or more usually, water) to the irrigators 18 according to the position of the knobs 6 and 7 shown in figures 2, 3 and 4. Knob 6 allows the manual adjustment of the liquid volume delivered, while knob 7 allows the manual adjustment of the actuation frequency of pump 30. Figure 3 shows that knob 7 also has an OFF position, which allows the pump to be disabled extensively in weather conditions which are unsuitable for irrigation, more specifically raining conditions.

## Claims

1. A pumping device (1) for liquids, in particular water, which comprises a pump (30) connectable to a pumping tube (15) which can be immersed in a liquid tank (17) to remove liquid therefrom and a delivery tube (16) connectable to one or more irrigation devices (18), at least one rechargeable battery (10) for supplying power to the pump (30) and at least one solar panel (3) for charging said rechargeable battery (10), further comprising a manual controller (8) interposed between the rechargeable battery (10) and the pump (30) for manually adjusting the liquid volume to be delivered and the liquid dispensing frequency, and a voltage regulator (11) interposed between the solar panel (3) and the rechargeable battery (10), **characterized in that** it comprises a Schottky diode (12) interposed between the voltage regulator (11) and the rechargeable battery (10).

2. A device according to claim 1, **characterized in that** said manual controller (8) comprises a rotary knob (6) for adjusting the liquid volume delivered by the pump (30) and a knob (7) for adjusting the actuation frequency of the pump (30).
